# EUROPÄISCHE PATENTSCHRIFT

(11) **EP 2 836 334 B1**
(45) Veröffentlichungstag und Bekanntmachung des Hinweises auf die Patenterteilung: **29.07.2020**
(21) Anmeldenummer: 13722976.1
(22) Anmeldetag: 26.03.2013
(51) Int. Cl.: B23K 37/053, B23K 31/02, B23K 9/028, B23K 26/28

(54) **VORRICHTUNG ZUM VERBINDEN DER ENDEN VON ROHREN AUS STAHL MITTELS ORBITALSCHWEISSEN**
DEVICE FOR CONNECTING THE ENDS OF PIPES MADE OF STEEL BY MEANS OF AN ORBITAL WELDING PROCESS
DISPOSITIF DE RACCORDEMENT DES EXTRÉMITÉS DE TUBES EN ACIER AU MOYEN D'UN PROCÉDÉ DE SOUDAGE ORBITAL

(30) Priorität: 10.04.2012 DE 102012007563
(43) Veröffentlichungstag der Anmeldung: 18.02.2015
(73) Patentinhaber: Mannesmann Line Pipe GmbH, 57074 Siegen (DE)
(72) Erfinder: KOCKS, Hans-Jürgen, 57258 Freudenberg (DE); WINKELS, Jörn, 59457 Werl (DE); KEITEL, Steffen, 06120 Halle (DE); NEUBERT, Jan, 04177 Leipzig (DE); RUDE, Sebastian, 06231 Bad Dürrenberg (DE)
(74) Vertreter: Meissner, Peter E.
(86) Internationale Anmeldenummer: PCT/DE2013/000179
(87) Internationale Veröffentlichungsnummer: WO 2013/152752

(56) Entgegenhaltungen:
- AU-A- 6 506 074
- DE-A1- 10 334 446
- GB-A- 2 195 570
- US-A- 3 668 359
- US-A- 4 051 342

## Beschreibung

Die Erfindung betrifft eine Vorrichtung zum Verbinden der Enden von Stahlrohren mittels Orbitalschweißen, gemäß dem Oberbegriff des Patentanspruches 1.

Insbesondere betrifft die Erfindung das Verschweißen von Rohren, die beispielsweise Wanddicken von 2 bis 20 mm und Durchmesser von 60 bis 1600 mm aufweisen können und die mittels unterschiedlicher Schweißverfahren, wie beispielsweise Laserstrahlschweißen, Laser-Lichtbogenschweißen in Hybridtechnik oder Lichtbogenschweißen, miteinander zu Rohrleitungen verbunden werden. Unter Rohren werden im Folgenden sowohl kreisrunde Rohre wie auch Hohlprofile mit unterschiedlichen Querschnitten verstanden.

Das Schweißen von Rohren in Orbitaltechnik ist beispielsweise aus der DE 103 34 446 A1 allgemein bekannt. Hier wird eine Orbital-Schweißvorrichtung zum Verbinden zweier Rohrenden offenbart, wobei diese auf ein erstes Rohrende aufgesetzt und damit verklemmt wird und das zweite Rohrende in Schweißposition vor das erste Rohrende gebracht wird. Mittels zweier um 180° versetzter Schweißköpfe, die ihrerseits schwenkbar um eine Achse geführt sind, kann eine 360° Rundschweißnaht ausgeführt werden. Nachteilig hierbei ist, dass zwei Schweißköpfe notwendig sind, um das Rohr am kompletten Umfang zu verschweißen.

Eine weitere Orbitalschweißvorrichtung ist aus der WO 2005/056230 A1 bekannt, bei der eine Kombination aus Metallschutzgas-Schweißen und Laserstrahlschweißen zum Einsatz kommt. Dieses so genannte Laser-MSG-Hybridschweißen ist dadurch gekennzeichnet, dass der Lichtbogen und der Laserstrahl in einem definierten Abstand zueinander angeordnet sind und eine gegenüber einem reinen Laserstrahlschweißprozess höhere Spaltüberbrückbarkeit erreicht werden kann. Die Vorrichtung umfasst einen Führungsring, der zu dem Rohrende eines ersten Rohres ausrichtbar ist. Das Ausrichten erfolgt über eine Vielzahl entlang des Führungsrings-Umfangs angeordneter Spannschrauben, mittels derer der Abstand des Führungsringes von der Rohroberfläche exakt einstellbar ist. Der Führungsring dient zum Führen eines darauf verfahrbaren Orbitalwagens, der neben dem Schweißkopf weitere Komponenten zur Prozessüberwachung und Schweißnahtprüfung aufnehmen kann. Mit der beschriebenen Vorrichtung werden im mobilen Einsatz Rohre in der Orbitalschweißtechnik zu Pipelines verschweißt.

Nachteilig bei dieser Vorrichtung ist die aufwändige Konstruktion mit um das Rohr geschlossenen Führungsringen und die aufwändige Ausrichtung und Zentrierung der Rohrenden. Gerade die Zentrierung ist bei größeren Rohrdurchmessern sehr aufwändig und erfordert zusätzliche Zentriereinrichtungen in der Vorrichtung mit entsprechend großen Haltekräften, um während des Schweißens eine geometrisch stabile Schweißfuge zu realisieren. Hierdurch wird die Vorrichtung sehr schwer und ist nur mit hohem Aufwand ortsflexibel einsetzbar.

Aufwändig ist zudem der Ablauf des Schweißprozesses, bei dem die Rohrenden in die Vorrichtung eingeschoben und zentriert werden müssen und anschließend das verschweißte Rohr der Länge nach aus der Vorrichtung herausgeführt werden muss.

Zusammenfassend ist festzustellen, dass nach dem Stand der Technik zurzeit kein industriell einsetzbares Orbitalführungssystem existiert, welches auf die Anforderungen hinsichtlich Qualität und Wirtschaftlichkeit des Orbitalschweißens optimal abgestimmt ist.

Aufgabe der Erfindung ist es, eine Vorrichtung zum Verbinden der Enden von Rohren aus Stahl mittels Orbitalschweißen anzugeben, welches die beschriebenen Nachteile überwindet, d. h. kostengünstig herstellbar sowie flexibel und mit geringem Zeitaufwand einsetzbar ist.

Diese Aufgabe wird ausgehend vom Oberbegriff in Verbindung mit den kennzeichnenden Merkmalen des Anspruches 1 gelöst. Vorteilhafte Weiterbildungen sind Bestandteil von Unteransprüchen.

Die Lehre der Erfindung umfasst eine Vorrichtung zum Verbinden der Enden von bereits ausgerichteten und heftnahtgeschweißten Rohren aus Stahl mittels Orbitalschweißen, mit einer von den Rohrenden gebildeten Schweißfuge und um die Schweißfuge orbital verfahrbaren Werkzeugen zum Schweißen und Prüfen der Schweißnaht, *umfassend um die Schweißfuge orbital verfahrbare Werkzeuge zum Schweißen der Schweißnaht*, die dadurch gekennzeichnet ist, dass die Vorrichtung *zusätzlich* aus an beiden Seiten an den jeweiligen Rohrenden im Bereich der Schweißstelle auf die Rohrenden aufsetzbaren und fest anklemmbaren Führungsgrundplatten besteht, wobei die Führungsgrundplatten zentrisch eine kreisförmige Ausnehmung mit einer radialen Öffnung zur zentrischen Aufnahme der zu verschweißenden Rohre in der Ausnehmung aufweisen, mit an den jeweiligen von der Schweißfuge abgewandten Seite der Führungsgrundplatten fest angeschlossenen Klemmelementen zur Verklemmung der Führungsgrundplatten mit den Rohrenden sowie mit einem an den zur Schweißfuge zugewandten Innenseiten zwischen den Führungsgrundplatten drehgelagert angeordneten und um mindestens 360° um die Rohrenden zentrisch schwenkbaren Rahmen zur Aufnahme der Schweiß- und Prüfwerkzeuge, *wobei der Rahmen aus Schweißbügeln und aus die Schweißbügel verbindenden Werkzeugaufnahmen für die Schweiß- und Prüfwerkzeuge besteht.*

Zur Schweißung wird die Vorrichtung auf einfache Weise mit den Führungsgrundplatten symmetrisch zur Schweißfuge mit einem radialen Abstand auf die Rohrenden aufgesetzt und mit den beiderseits an den Führungsgrundplatten fest angeschlossenen Klemmelementen mit den Rohrenden verklemmt. Dazu ist der Durchmesser der kreisförmigen Ausnehmung in den Führungsgrundplatten größer als der Durchmesser der aufzunehmenden Rohrenden. Hierdurch kann die Vorrichtung vorteilhaft auch zum Verschweißen unterschiedlicher Rohrdurchmesser angewendet werden. Das zu schweißende Rohr befindet sich dabei in der kreisförmigen Ausnehmung der Führungsgrundplatten, wobei der radiale Abstand zwischen Führungsgrundplatte und Rohr so eingestellt wird, dass der zwischen den Führungsgrundplatten drehbar angeordnete Schwenkrahmen mit Werkzeugaufnahmen für Schweiß- und Prüfwerkzeuge zentrisch um die Längsachse des zu schweißenden Rohres läuft.
Die erfindungsgemäße Vorrichtung überwindet die Nachteile der bekannten Orbitalschweißvorrichtungen einerseits durch einen sehr einfachen und damit kostengünstigen Aufbau, andererseits dadurch, dass diese Vorrichtung vorteilhaft für bereits ausgerichtete, d. h. zentrierte und heftnahtgeschweißte Rohre, eingesetzt wird.

Durch die Entkopplung des Zentrierens und Heftens der Rohrenden von der eigentlichen Orbitalfertigschweißung wird die Konstruktion deutlich einfacher im Aufbau und flexibler, d. h. ortsungebunden einsetzbar.
Mit der vorgeschlagenen Vorrichtung kann zudem mit nur einem Schweißkopf die Umfangsnaht über 360° verschweißt werden.

Für das Fügen der Rohre kommt vorteilhaft das Laserstrahlschweißen zum Einsatz. Hierfür wird ein von einer Laserstrahlquelle erzeugter Rohstrahl über eine Lichtleitfaser zu einer am Fahrwagen befestigten Optik geleitet. Diese formt den Laserstrahl und leitet ihn auf den Stoß der beiden Rohre weiter. Zu diesem Zweck wird vorteilhaft eine abgewinkelte Optik eingesetzt, wobei die Kollimierung des Laserstrahls 150 mm und die Fokussierung 200 mm beträgt. Des Weiteren ist zusätzlich ein sogenannter LWM-Sensor (Laser-Welding-Monitor) an der Optik angebracht, welcher der Erfassung folgender Größen dient:
- emittiertes Plasmaleuchten,
- rückreflektierte Laserstrahlung,
- reflektierte Laserleistung am Strahlteiler.

Der Grund für den Einsatz einer abgewinkelten Optik liegt in der Reduzierung des Arbeitsbereichs durch die Lichtleitfaser. Diese weist einen großen Biegeradius auf und würde den für das Umlaufen erforderlichen Arbeitsbereich stark vergrößern. Durch den Einsatz einer abgewinkelten Optik wird ein Verlegen und Anschließen der Lichtleitfaser in Richtung der Rohrlängsachse möglich. Die Zustellbewegung der Optik erfolgt über zwei Zustellachsen, für eine genaue Positionierung des Prozesses in Y- (längs zur Rohrachse) und Z-Richtung (in radialer Richtung zur Rohroberfläche) sind diese vorteilhaft als Kugelumlaufspindelgetriebe ausgebildet.

Für ein Erfassen des Schweißstoßes, insbesondere Kantenversatz und Spalt, wird in einer vorteilhaften Weiterbildung der Erfindung der von einem Linienlaser erzeugte Linienstrich quer zum Stoß von einer Kamera erfasst. Die so aufgenommenen Werte werden für die Nahtprogrammierung verwendet. Die Laserlinie wird von einer Kamerasoftware erfasst und beeinflusst über eine Positionsberechnung die Höhen- und Seitenregelung der Optik. Im Anschluss an den Schweißprozess wird die Kamera für eine Topografie der Naht eingesetzt. Dabei wird auf Nahtüberhöhungen und nach außen geöffnete Schweißfehler geachtet. Die Kamera und der Linienlaser sind wie die Optik zentral zwischen den beiden Schwenkbügeln auf dem Fahrwagen angebracht und werden mit der Umlaufbewegung um das Rohr geführt.

Zur Beurteilung von inneren Schweißfehlern werden zwei Ultraschallprüfköpfe dem Schweißkopf nachlaufend mit um das Rohr geführt. Dabei ist je einer der Prüfköpfe auf jeder Seite der Schweißnaht angeordnet. Die Prüfköpfe selbst sind als Zylinder drehbar angeordnet und funktionieren vorteilhaft koppelmittelfrei. Sie sind in einem über Achsen einstellbaren Abstand zum Stoß angebracht und werden über Federspannung in Kontakt zum Rohr gehalten. Für unterschiedliche Rohrdurchmesser ist jedoch auch eine Höheneinstellung über Achsen möglich. Wie Optik und Kamera sind die Ultraschallprüfköpfe zentral zwischen den beiden inneren Platten angebracht und werden mit diesen gemeinsam um das Rohr verfahren.

Die Bedienung der Anlage erfolgt über eine externe Steuerung, über welche die Laseranlage und die Gerätetechnik angesteuert werden können. Sie erfasst und verarbeitet auch alle Daten der Kamera der Ultraschallprüfköpfe und des an der Optik befindlichen LWM-Sensors. Hier wird über eine Software der genaue Programmablauf festgelegt und gestartet.

Ergänzend zu den für den eigentlichen Schweißprozess notwendigen Werkzeugen können mittels der Fahrwagen weitere für den Schweißprozess notwendige, den Schweißprozess unterstützende oder für nachfolgende Fertigungsschritte erforderliche Werkzeuge oder Komponenten geführt werden. Dies können z. B. ein Nahtverfolgungssystem oder Messmittel zur zerstörungsfreien Qualitätskontrolle der Schweißnaht durch Nahtvermessung oder Fehlerdetektion sein. Mittels eines dem Schweißprozess vorweg bewegten Systems kann die Nahtfuge erfasst werden und der nachfolgende Schweißprozess in seiner Lage geregelt werden.

Mittels z. B. optischer Systeme ist außerdem eine Qualitätsprüfung der Schweißnaht möglich.

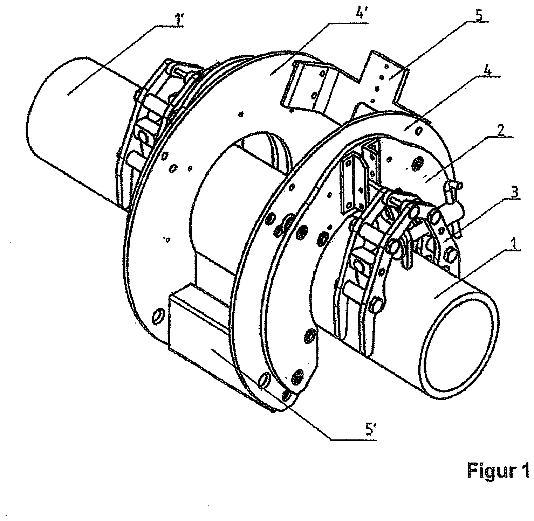

**Figur 1** verdeutlicht den Grundaufbau der erfindungsgemäßen Vorrichtung. Diese besteht aus den beiden kreisringförmigen Führungsgrundplatten 2, welche mit einer radialen Öffnung versehen sind, um sie auf die zu fügenden Rohre 1, 1' aufsetzen zu können. Der innere Kreisringdurchmesser ist größer als der Durchmesser der zu verschweißenden Rohre 1, 1', um über das radiale Spiel eine exakte Justierung für einen zentrischen Umlauf der Schweiß- und Prüfwerkzeuge vornehmen zu können. Zur Befestigung der Vorrichtung auf den Enden der Rohre 1, 1' sind an den von der Schweißfuge abgewandten Außenseiten der Führungsgrundplatten 2 Klemmelemente 3 angebracht, mit denen die beiden Führungsgrundplatten 2 mit je einem Rohrende über Klemmelemente 3 verklemmt werden.

An den inneren der Schweißfuge zugewandten Seiten der Führungsgrundplatten 2 ist jeweils ein ebenfalls mit radialer Öffnung versehener kreisringförmiger Schwenkbügel 4, 4' drehgelagert geführt, so dass diese eine Kreisbewegung entlang den Führungsgrundplatten 2 um die Rohre 1, 1' ausführen können. Die Schwenkbügel 4, 4' sind starr mittels Werkzeugaufnahmen 5, 5' miteinander zu einem Schwenkrahmen verbunden, wobei auf den Werkzeugaufnahmen 5, 5' alle füge- und prüftechnischen Komponenten montiert werden können.

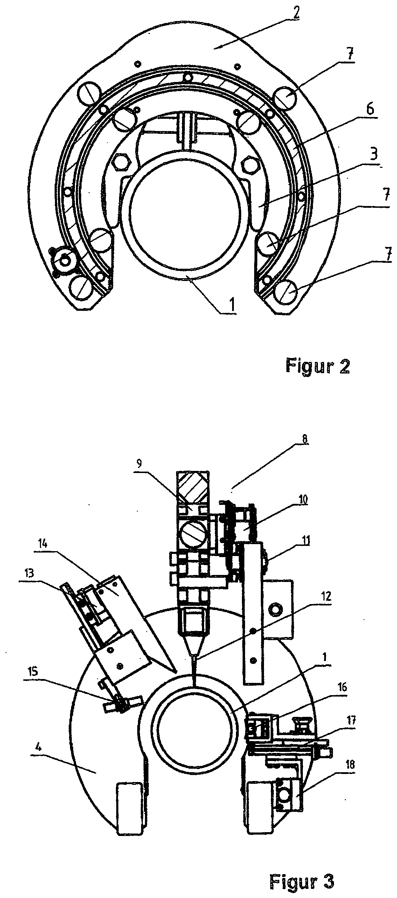

**Figur 2** zeigt in einer Schnittdarstellung schematisch die Ringführung der Schwenkbügel bzw. des Schwenkrahmens. Die kreisringförmige Führungsgrundplatte 2 ist auf das Rohr 1 aufgesetzt und mit dem Klemmelement 3 mit dem Rohr 1 verklemmt. Über das radiale Spiel zwischen Außendurchmesser Rohr 1 und innerem Kreisringdurchmesser der Führungsgrundplatte 2 kann eine exakte zentrische Justierung der Vorrichtung im Bezug zur Längsachse des Rohres 1 erfolgen. Um eine Kreisbewegung der Schwenkbügel 4, 4' zu ermöglichen, werden diese vorteilhaft über eine jeweils zwischen den Führungsgrundplatten 2 und Schwenkbügeln 4, 4' angeordnete kreisringförmige Führungsschiene 6 orbital schwenkbar geführt. Die Führungsschienen 6 sind an den Schwenkbügeln 4, 4' angebracht und werden jeweils über an der Außen- und Innenoberfläche der Führungsschienen 6 angeordnete Führungsrollen 7 geführt, die ihrerseits mit den Führungsgrundplatten 2 verbunden sind.

Für den Antrieb der Umlaufbewegung des Schwenkrahmens ist erfindungsgemäß auf beiden Seiten jeweils zwischen Schwenkbügel 4, 4' und Führungsgrundplatte 2 ein Zahnkranz und ein Antriebsmotor angebracht (hier nicht dargestellt). Die beiden Zahnkränze sind an den Schwenkbügeln 4, 4' befestigt und führen die Umlaufbewegung mit aus. Die Motoren sind mit den Führungsgrundplatten 2 verbunden und übertragen die Drehbewegung über Ritzel auf die Zahnkränze.

Zwischen Motor und Ritzel ist in einer vorteilhaften Weiterbildung der Erfindung eine Übersetzung bestehend aus einem Planetengetriebe und einem Schneckenrad angebracht. Diese sorgt für ein möglichst kontinuierliches Starten und Enden der Drehbewegung.

**Figur 3** zeigt in einer schematischen Ansicht die auf die Rohrenden aufgesetzte Vorrichtung in Rohrlängsachse mit montierten Schweiß- und Prüfwerkzeugen auf zwischen den Schwenkbügeln 4, 4' angeordneten Werkzeugaufnahmen 5, 5'. Aus Gründen der besseren Darstellung sind in dieser Ansicht nur der hintere Schwenkbügel 4 und die daran über die hier nicht dargestellten Werkzeugaufnahmen 5, 5' befestigten Schweiß- und Prüfwerkzeuge gezeigt.

An dem Schwenkbügel 4 ist eine in verschiedenen Achsen verfahrbare Laserschweißeinrichtung 8 angeordnet, die aus einem Schweißkopf 9 und Verfahreinrichtungen zur radialen Höheneinstellung 10 und zur Positionierung in Rohrlängsrichtung 11 besteht, mit denen der Laserstrahl 12 exakt zur Schweißfuge der zu verbindenden Rohre 1, 1' ausgerichtet werden kann.

Zur Programmierung der erforderlichen Nahtgeometrie und damit zur Steuerung des Lasers (z. B. Positionierung, Leistung) wird die Geometrie des Schweißstoßes, insbesondere Kantenversatz und Spalt, mittels eines Linienlasers 13 erzeugten Linienstrichs (hier nicht dargestellt) quer zur Schweißfuge von einer Kamera 14 erfasst.

Die so aufgenommenen Werte werden für die Nahtprogrammierung verwendet. Die Laserlinie wird von einer Kamerasoftware erfasst und beeinflusst über eine Positionsberechnung die Höhen- und Seitenregelung der Optik des Schweißkopfes 9. Linienlaser 13 und Kamera 14 sind zur exakten Positionierung mit einer Verstelleinrichtung 15 zur Höhen- und Winkeleinstellung versehen.

Zur Beurteilung von Fehlern in der Schweißnaht direkt nach Schweißung sind zwei Ultraschallprüfköpfe 16 auf einer weiteren hier nicht dargestellten Werkzeugaufnahme so angeordnet, dass sie von beiden Seiten die Schweißnaht prüfen. Die Ultraschallprüfköpfe 16 sind drehbar angeordnet und können mittels weiterer Verfahreinrichtungen 17, 18 radial in der Höhe und in Rohrlängsrichtung in Bezug zur prüfenden Schweißnaht eingestellt werden. Die Ultraschallprüfköpfe 16 sind vorzugsweise zur koppelmittelfreien Prüfung geeignet.

**Bezugszeichenliste**

| **Nr.** | **Bezeichnung** |
|---|---|
| 1, 1' | Rohre |
| 2 | Führungsgrundplatten |
| 3 | Klemmelemente |
| 4, 4' | Schwenkbügel |
| 5 | Werkzeugaufnahme Schweißkopf |
| 5' | Werkzeugaufnahme Prüfwerkzeuge |
| 6 | Führungsschienen |
| 7 | Führungsrollen |
| 8 | Laserschweißeinrichtung |
| 9 | Schweißkopf |
| 10 | Verfahreinrichtung zur radialen Höheneinstellung |
| 11 | Verfahreinrichtung zur Positionierung in Rohrlängsrichtung |
| 12 | Laserstrahl |
| 13 | Linienlaser |
| 14 | Kamera |
| 15 | Höhen- und Winkelverstellung |
| 16 | Ultraschall-Prüfköpfe |
| 17 | Verfahreinrichtung zur radialen Höheneinstellung |
| 18 | Verfahreinrichtung zur Positionierung in Rohrlängsrichtung |

## Patentansprüche

1. Vorrichtung zum Verbinden der Enden von bereits ausgerichteten und heftnahtgeschweißten Rohren (1, 1') aus Stahl mittels Orbitalschweißen mit einer von den Rohrenden gebildeten Schweißfuge und um die Schweißfuge orbital verfahrbaren Werkzeugen zum Schweißen und Prüfen der Schweißnaht, *umfassend um die Schweißfuge orbital verfahrbare Werkzeuge zum Schweißen der Schweißnaht,*
**dadurch gekennzeichnet,**
**dass** die Vorrichtung *zusätzlich* aus an beiden Seiten an den jeweiligen Rohrenden im Bereich der Schweißstelle auf die Rohrenden aufsetzbaren und fest anklemmbaren Führungsgrundplatten (2) besteht, wobei die Führungsgrundplatten (2) zentrjsch eine kreisförmige Ausnehmung mit einer radialen Öffnung zur Durchführung und zur zentrischen Aufnahme der zu verschweißenden Rohre (1, 1') in der Ausnehmung aufweisen, mit an den jeweiligen von der Schweißfuge abgewandten Seiten der Führungsgrundplatten (2) fest angeschlossenen Klemmelementen (3) zur Verklemmung der Führungsgrundplatten (2) mit den Rohrenden sowie mit einem an den zur Schweißfuge zugewandten Innenseiten zwischen den Führungsgrundplatten (2) drehgelagert angeordneten und um mindestens 360° um die Rohrenden zentrisch schwenkbaren Rahmen zur Aufnahme der Schweiß- und Prüfwerkzeuge, *wobei der Rahmen aus Schwenkbügeln (4, 4) und aus die Schwenkbügel (4, 4') verbindenden Werkzeugaufnahmen (5, 5) für die Schweiß- und Prüfwerkzeuge besteht.*

2. Vorrichtung nach Anspruch 1,
**dadurch gekennzeichnet,**
**dass** zwischen den Führungsgrundplatten (2) und den Schwenkbügeln (4, 4') jeweils eine kreisringförmige Führungsschiene (6) angeordnet ist, auf der die Schwenkbügel (4, 4') orbital um das Rohr (1, 1') schwenkbar gelagert sind.

3. Vorrichtung nach Anspruch 2,
**dadurch gekennzeichnet, dass** die Schwenkbügel (4, 4') über Führungsrollen (7) an den Führungsschienen (6) gelagert sind.

4. Vorrichtung nach einem der Ansprüche 1 bis 3,
**dadurch gekennzeichnet,**
**dass** als Schweißwerkzeuge Laser-, Schutzgas- und/oder hybrid arbeitende Schweißköpfe (9) auf den Werkzeugaufnahmen (5, 5') montiert sind.

5. Vorrichtung nach einem der Ansprüche 1 bis 4,
**dadurch gekennzeichnet,**
**dass** als Prüfwerkzeug ein System zur zerstörungsfreien Schweißnahtprüfung montiert ist.

6. Vorrichtung nach Anspruch 5,
**dadurch gekennzeichnet,**
**dass** das System zur zerstörungsfreien Schweißnahtprüfung eine Ultraschall-Prüfeinrichtung ist.

7. Vorrichtung nach Anspruch 6,
**dadurch gekennzeichnet,**
**dass** die Ultraschall-Prüfeinrichtung mindestens zwei Ultraschall-Prüfköpfe (16) umfasst, die beidseitig der Schweißnaht auf die Rohrenden aufsetzbar sind.

8. Vorrichtung nach einem der Ansprüche 1 bis 7,
**dadurch gekennzeichnet,**
**dass** neben den Schweiß- und Prüfwerkzeugen weitere Werkzeuge auf den Werkzeugaufnahmen angeordnet sind.

9. Vorrichtung nach Anspruch 8,
**dadurch gekennzeichnet,**
**dass** die weiteren Werkzeuge eine Vorwärmeinrichtung, ein oder mehrere zusätzliche Schweißköpfe, ein Nahtgeometrie-Erfassungssystem und/oder ein Nahtverfolgungssystem sind.

## Claims

1. Device for connecting the ends of already aligned and tack-welded pipes (1, 1') made of steel by means of orbital welding, having a weld joint formed by the pipe ends and tools which can be moved orbitally about the weld joint for welding and testing the weld seam, *comprising tools which can be moved orbitally about the weld joint for welding the weld seam,*
**characterised in that**
the device consists *additionally* of guide base plates (2) which can be placed and clamped rigidly on the pipe ends on both sides on the respective pipe ends in the region of the weld, the guide base plates (2) having centrally a circular recess with a radial opening for guiding through and for centrally receiving the pipes (1, 1') to be welded in the recess, having clamping elements (3) which are attached rigidly on the respective sides of the guide base plates (2) which are orientated away from the weld joint for clamping the guide base plates (2) with the pipe ends, and also having a frame which is disposed mounted rotatably on the inner sides orientated towards the weld joint between the guide base plates (2) and is pivotable centrally by at least 360° about the pipe ends for receiving the welding and testing tools, *the frame consisting of swivel brackets (4, 4') and tool receiving means (5, 5) connecting the swivel brackets (4, 4') for the welding and testing tools.*

2. Device according to claim 1,
**characterised in that**
there is disposed between the guide base plates (2) and the swivel brackets (4, 4') respectively a circular guide rail (6), on which the swivel brackets (4, 4') are mounted rotatably orbitally about the pipe (1, 1').

3. Device according to claim 2,
**characterised in that**
the swivel brackets (4, 4') are mounted on the guide rails (6) via guide rollers (7).

4. Device according to one of the claims 1 to 3,
**characterised in that**
laser-, protective gas- and/or hybrid-operating weld heads (9) are mounted on the tool receiving means (5, 5') as welding tools.

5. Device according to one of the claims 1 to 4,
**characterised in that**
a system for non-destructive weld seam testing is mounted as testing tool.

6. Device according to claim 5,
**characterised in that**
the system for non-destructive weld seam testing is an ultrasound testing device.

7. Device according to claim 6,
**characterised in that**
the ultrasound testing device comprises at least two ultrasound testing heads (16) which can be placed on the pipe ends on both sides of the weld seam.

8. Device according to one of the claims 1 to 7,
**characterised in that**,
in addition to the welding and testing tools, further tools are disposed on the tool receiving means.

9. Device according to claim 8,
**characterised in that**
the further tools are a preheating device, one or more additional welding heads, a weld geometry detecting system and/or a weld tracking system.

## Revendications

1. Dispositif de liaison des extrémités de tubes (1, 1') en acier, déjà alignés et soudés par points, au moyen d'une soudure orbitale avec un joint de soudure constitué des extrémités des tubes et d'outils mobiles de manière orbitale autour du joint de soudure pour la soudure et le contrôle du cordon de soudure, comprenant des outils mobiles de manière orbitale autour du joint de soudure pour la soudure du cordon de soudure,
**caractérisé en ce que**
le dispositif est constitué en outre de plaques de base de guidage (2) pouvant être posées sur les extrémités des tubes et serrées fermement sur les extrémités correspondantes des tubes au niveau du point de soudure, dans lequel les plaques de base de guidage (2) comprennent, au centre, un évidement circulaire avec une ouverture radiale pour le passage et pour le logement centré des tubes à souder (1, 1') dans l'évidement, avec des éléments de serrage (3) fermement raccordés aux côtés, respectivement opposés au joint de soudure, des plaques de base de guidage (2), pour le serrage des plaques de base de guidage (2) avec les extrémités des tubes ainsi qu'avec un cadre logé de manière rotative au niveau des côtés internes orientés vers le joint de soudure, entre les plaques de base de guidage (2) et pivotant de manière centrée d'au moins 360° autour des extrémités des tubes, pour le logement des outils de soudure et de contrôle, dans lequel le cadre est constitué d'étriers de pivotement (4, 4') et de logements d'outils (5, 5') reliant les étriers de pivotement (4, 4') pour les outils de soudure et de contrôle.

2. Dispositif selon la revendication 1,
**caractérisé en ce que**
entre les plaques de base de guidage (2) et les étriers de pivotement (4, 4'), est disposé un rail de guidage circulaire (6) sur lequel les étriers de pivotement (4, 4') sont logés de manière orbitalement pivotante autour du tube (1, 1').

3. Dispositif selon la revendication 2,
**caractérisé en ce que** les étriers de pivotement (4, 4') sont logés par l'intermédiaire de rouleaux de guidage (7) sur les rails de guidage (6).

4. Dispositif selon l'une des revendications 1 à 3,
**caractérisé en ce que**
en tant qu'outils de soudure, des têtes de soudure (9) au laser, au gaz protecteur et/ou à fonctionnement hybride, sont montées sur les logements d'outils (5, 5').

5. Dispositif selon l'une des revendications 1 à 4,
**caractérisé en ce que**
en tant qu'outil de contrôle, un système de contrôle non destructif de cordon de soudure est monté.

6. Dispositif selon la revendication 5,
**caractérisé en ce que**
le système de contrôle non destructif de cordon de soudure est un dispositif de contrôle à ultrasons.

7. Dispositif selon la revendication 6,
**caractérisé en ce que**
le dispositif de contrôle à ultrasons comprend au moins deux têtes de contrôle à ultrasons (16) qui peuvent être posées des deux côtés du cordon de soudure sur les extrémités des tubes.

8. Dispositif selon l'une des revendications 1 à 7,
**caractérisé en ce que**
en plus des outils de soudure et de contrôle, sont disposés des outils supplémentaires sur les logements d'outils.

9. Dispositif selon la revendication 8,
**caractérisé en ce que**
les outils supplémentaires sont un dispositif de pré-chauffage, une ou plusieurs têtes de soudure supplémentaires, un système de mesure de la géométrie du cordon et/ou un système de suivi du cordon.
